# EUROPEAN PATENT SPECIFICATION

(11) **EP 2 818 039 B1**
(45) Date of publication and mention of the grant of the patent: **21.09.2016**
(21) Application number: 14173677.7
(22) Date of filing: 24.06.2014
(51) Int. Cl.: A01G 9/02

(54) **Plant pot**
Pflanzentopf
Pot

(30) Priority: 26.06.2013 NL 2011042
(43) Date of publication of application: 31.12.2014
(73) Proprietor: Desch Plantpak B.V., 5145 PC Waalwijk (NL)
(72) Inventor: Waqué, Cornelis Antonius, 1511 BW Oostzaan (NL)
(74) Representative: Algemeen Octrooi- en Merkenbureau B.V.

(56) References cited:
- EP-A1- 1 410 997
- WO-A1-03/022033
- DE-U1-202006 004 925
- FR-A3- 2 031 362
- US-A- 6 134 832

## Description

The present invention relates to a plant pot comprising a bottom, a standing wall connecting to the bottom and a stiffened flanged edge on the upper side of the standing wall, which flanged edge has a downward oriented edge part and a flanged edge part which mutually connects the standing wall and the downward oriented edge part, wherein the flanged edge between the standing wall and the downward oriented edge part is provided with radially extending partitions. Such a plant pot is described in the American publication US 6134832. During use wherein the plant pots are filled with substrate in which a plant grows such plant pots must be suitable for picking up by the flanged edge part or being suspended therefrom in the case the plant pot is a hanging pot. In order to impart an increased stiffness to the plant pot at the position of the upper edge, this being necessary to prevent substantial deformation of the plant pot is in the case of the above-mentioned load thereon, the upper edge of the described plant pot is flanged. Where reference is made above or below to "flanged", this term is not used to refer to a preceding folding operation but is understood to mean only the shape which is the result of a hypothetical flanging operation. In this case this shape is substantially that of a reverse U-shape, wherein the two downward oriented legs of the reverse U-shape are defined by the downward oriented edge part and (a part of) the standing wall, while the body part of the reverse U-shape, which mutually connects the two downward oriented legs of the reverse U-shape, is defined by the flanged edge part. The plant pot according to US 6134832 is further provided on the inner side of the flanged upper edge with equidistantly spaced radial partitions which provide additional resistance to deformation of the flanged upper edge, and thereby of the plant pot as a whole.

The invention has for its object to provide a plant pot, the flanged upper edge of which has improved stiffness properties. The plant pot according to the invention is characterized for this purpose in that the plant pot is also provided with an at least partially wire-like profile at least on the flanged edge part, which profile extends over at least the greater part of the length of the flanged edge. The stiffness of the flanged edge can be increased using such a profile. This property can be used to provide a plant pot which, while the weight remains the same, is stiffer or to provide a plant pot which, while the stiffness remains the same, is lighter. In the latter case the plant pot can be embodied with thinner wall parts, which can result in a shorter cycle time during the injection moulding process with which the plant pot can be produced. The term "wire-like" is not understood here to mean that the wire form should have a determined cross-section. It is however understood to mean the elongate shape of the profile. The profile can for instance take the form of a cable or caterpillar wherein the cross-section of the profile changes in the length direction. The above stated stiffening effect of the profile can be substantial since the profile extends according to the invention over at least the greater part of the length of the flanged edge.

The stiffness of the flanged edge is also enhanced when the profile is also provided on the standing wall and/or on the downward oriented edge part.

The cross-section of the wire form is preferably such that the width of the wire form, as seen in cross-section, decreases in the direction of the surface of the flanged edge on which the profile is provided. A good connection, and thereby a good force transmission from the profile to the flanged edge, can thus be realized.

An improved material usage can further be obtained when the height of the wire form varies along the length of the profile. It is thus possible to opt for a limited height at a position where the effect of the profile on the stiffness is relatively the smallest.

It can be advantageous to provide the profile on the inner side of the flanged edge. The profile is thus concealed from view.

The maximum height of the profile is preferably twice the thickness of the flanged edge part or the downward oriented edge part at the positions where the profile is provided on the flanged edge part or the downward oriented edge part.

In order to maintain the same stiffness in all directions, it is recommended that the profile is provided in a regular pattern along the length of the flanged edge. Such a pattern can for instance be meandering or wave-like.

The partitions are more preferably also provided distributed in a regular pattern along the length of the flanged edge, wherein the regularity of the pattern of the profile corresponds to the regularity of the pattern of the partitions. That is, the pitch in the regular pattern of the partitions is the same as the pitch in the regular pattern of the stiffening parts.

In order to increase the resistance to deformation of the plant pot it is recommended that the profile comprises stiffening parts, preferably wire-like, which enclose an angle with the longitudinal direction of the flanged edge. Resistance is thus provided particularly to an initially round plant pot deforming to an oval shape.

The stiffening parts are particularly effective when the size of the angle lies between 30 degrees and 60 degrees.

The same advantage can be gained when the stiffening parts are at least partially arcuate.

According to a further preferred embodiment, adjacent stiffening parts connect in a V-shape to each other, wherein the V-shaped connections are provided on the side of the standing wall.

The advantages of the invention, at least to the extent they relate to the production process of the plant pot, become particularly manifest when the plant pot is an injection-moulded product.

The present invention will be elucidated hereinbelow on the basis of the description of a preferred embodiment thereof with reference to the following figures:
Figure 1 shows a bottom view of a plant pot according to the invention;
Figure 2 shows a perspective bottom view in vertical cross-section of the upper edge of the plant pot according to figure 1;

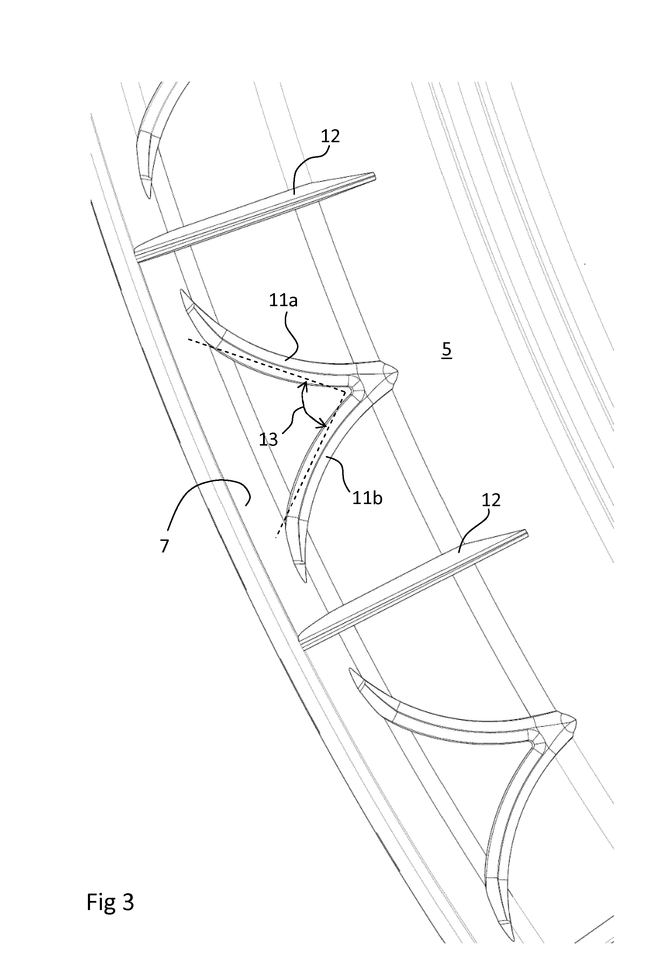

Figure 3 shows a perspective bottom view of a part of the flanged upper edge according to figure 1.

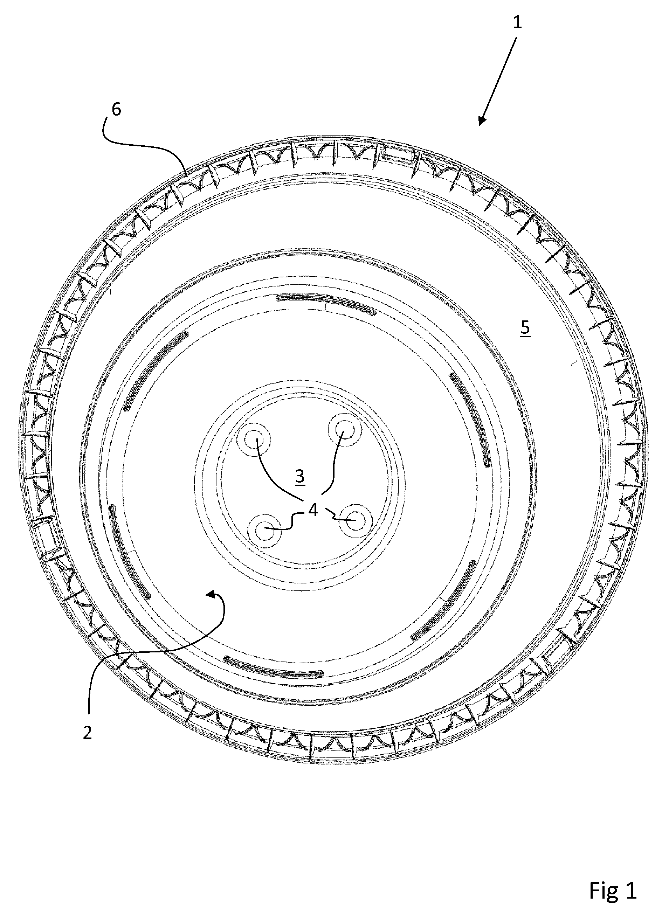

The plant pot 1 according to figure 1 is an injection-moulded plastic product and comprises a bottom 2 with a centrally located raised bottom part 3 in which are provided a number of openings 4 via which surplus water can escape from the plant pot 1. A standing, outward inclining wall 5 connects to the periphery of the circular bottom 2. The plant pot is provided on the upper side of this standing wall 5 with a stiffened flanged edge 6. The invention now relates particularly to the embodiment of this stiffened flanged edge 6.

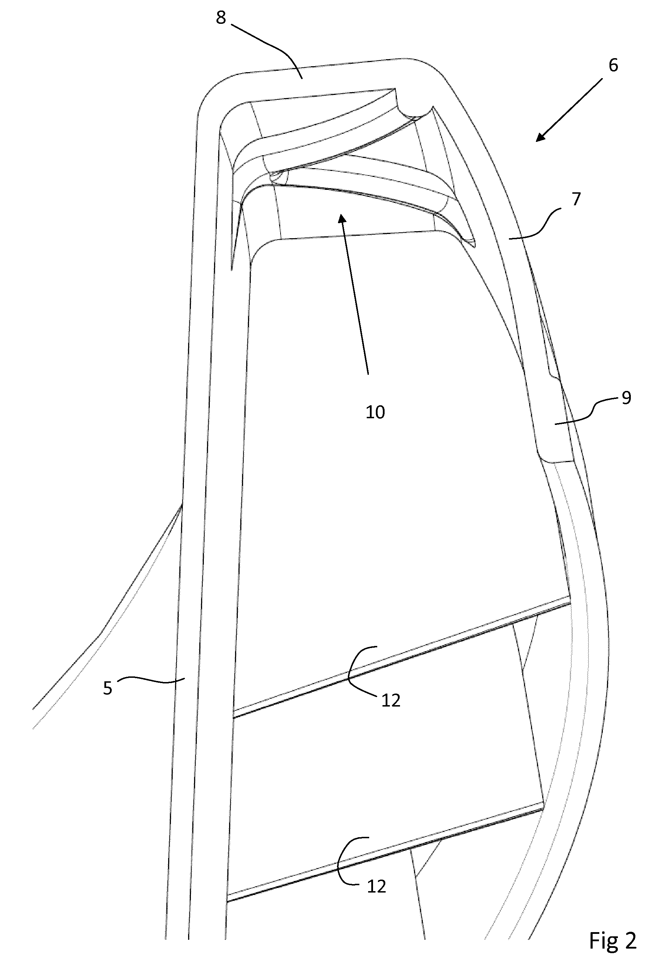

As shown clearly in figure 2, the flanged edge 6 has a downward oriented edge part 7 and a flanged edge part 8. Together with the upper part of the standing wall 5 the downward oriented edge part 7 and the flanged edge part 8 form a reverse U-shape. The flanged edge part 8 is flat and at least substantially parallel to the bottom 2. The downward oriented edge part 7 has a slightly convex shape and a slightly thickened outer end 9.

The flanged edge 6 is provided on the inner side with a profile 10 which extends over (the upper part of) the standing wall 5, the flanged edge part 8 and (the upper part of) the downward oriented edge part 7. The profile is wire-like and consists of arcuate and wire-like stiffening parts 11 a, 11 b provided in a regular pattern over substantially the whole periphery of the flanged edge 6. This pattern is interrupted at the position of engagement points 14 for hooks with which the plant pot can be suspended as a hanging pot. The height of the wire form equals the thickness of the flanged edge part 8. The width of the wire form decreases in the direction of the underlying flanged edge part 8 or in the direction of the downward oriented edge part 7.

In order to further increase the stiffness the flanged edge 6 is further provided at regular intervals with radially extending partitions 12 as already per se known from the prior art. Pairs of stiffening parts 11 a and 11 b extending between two adjacent partitions 12 connect to each other in a V-shape on the side of the standing wall 5. Tangents to the centre of the arcuate stiffening parts 11 a, 11 b enclose an angle 13 with each other of about 90°. Pairs of stiffening parts 11 a, 11 b provided on mutually opposite sides of a partition 12 are mirror-symmetrical relative to partition 12 and together form an arc of about 150°, albeit that this arc is interrupted at the position of the associated partition 12.

The free outer ends of the stiffening parts 11 a, 11 b have a decreasing height and width. The maximum height of the wire-like stiffening parts 11 a, 11 b is about 1.5 mm.

Due to the application of profile 10 the thickness of the walls of the flanged edge 6 can take a thinner form, for instance typically 0.2 mm thinner, while the stiffness remains the same. Although the profile 10 itself does of course also require material, there is some net saving of material, and the plant pot 1 can moreover be produced during injection moulding thereof with a shorter cycle time.

## Claims

1. A plant pot (1) comprising a bottom, a standing wall (5) connecting to the bottom and a stiffened flanged edge (6) on the upper side of the standing wall, which flanged edge has a downward oriented edge part (7) and a flanged edge part (8) which mutually connects the standing wall and the downward oriented edge part, wherein the flanged edge between the standing wall and the downward oriented edge part is provided with radially extending partitions (12), **characterized in that** the plant pot is also provided with an at least partially wire-like profile (10) at least on the flanged edge part, which profile extends over at least the greater part of the length of the flanged edge.

2. The plant pot according to claim 1, **characterized in that** the profile is also provided on the standing wall.

3. The plant pot according to claim 1 or 2, **characterized in that** the profile is also provided on the downward oriented edge part.

4. The plant pot according to any of the foregoing claims, **characterized in that** the cross-section of the wire form is such that the width of the wire form, as seen in cross-section, decreases in the direction of the surface of the flanged edge on which the profile is provided.

5. The plant pot according to any of the foregoing claims, **characterized in that** the height of the wire form varies along the length of the profile.

6. The plant pot according to any of the foregoing claims, **characterized in that** the profile is provided on the inner side of the flanged edge.

7. The plant pot according to any of the foregoing claims, **characterized in that** the maximum height of the profile is twice the thickness of the flanged edge part or the downward oriented edge part at the positions where the profile is provided on the flanged edge part or the downward oriented edge part.

8. The plant pot according to any of the foregoing claims, **characterized in that** the profile is provided in a regular pattern along the length of the flanged edge.

9. The plant pot according to claim 8, **characterized in that** the partitions are also provided distributed in a regular pattern along the length of the flanged edge, wherein the regularity of the pattern of the profile corresponds to the regularity of the pattern of the partitions.

10. The plant pot according to any of the foregoing claims, **characterized in that** the profile comprises stiffening parts which enclose an angle with the longitudinal direction of the flanged edge.

11. The plant pot according to claim 10, **characterized in that** the size of the angle lies between 30 degrees and 60 degrees.

12. The plant pot according to claim 10 or 11, **characterized in that** the stiffening parts are at least partially arcuate.

13. The plant pot according to any of the claims 10 to 12, **characterized in that** adjacent stiffening parts connect in a V-shape to each other.

14. The plant pot according to claim 13, **characterized in that** the V-shaped connections are provided on the side of the standing wall.

15. The plant pot according to any of the foregoing claims, **characterized in that** the plant pot is an injection-moulded product.

## Patentansprüche

1. Blumentopf (1) mit einem Boden, einer Standwand (5), die sich an den Boden anschließt, und einem versteiften Flanschrand (6) an der Oberseite der Standwand, wobei der Flanschrand ein nach unten gerichtetes Randteil (7) und ein Flanschrandteil (8) aufweist, welches die Standwand und das nach unten gerichtete Randteil miteinander verbindet, wobei der Flanschrand zwischen der Standwand und dem nach unten gerichteten Randteil mit radial verlaufenden Trennstegen (12) versehen ist, **dadurch gekennzeichnet, dass** der Blumentopf auch mit einem zumindest teilweise drahtartigen Profil (10) zumindest am Flanschrandteil versehen ist, wobei sich das Profil über zumindest den größeren Teil der Länge des Flanschrandes erstreckt.

2. Blumentopf nach Anspruch 1, **dadurch gekennzeichnet, dass** das Profil auch an der Standwand vorgesehen ist.

3. Blumentopf nach Anspruch 1 oder 2, **dadurch gekennzeichnet, dass** das Profil auch am nach unten gerichteten Randteil vorgesehen ist.

4. Blumentopf nach einem der vorhergehenden Ansprüche, **dadurch gekennzeichnet, dass** der Querschnitt der Drahtform dergestalt ist, dass die Breite der Drahtform im Querschnitt gesehen in Richtung der Oberfläche des Flanschrandes abnimmt, an dem das Profil vorgesehen ist.

5. Blumentopf nach einem der vorhergehenden Ansprüche, **dadurch gekennzeichnet, dass** sich die Höhe der Drahtform entlang der Länge des Profils verändert.

6. Blumentopf nach einem der vorhergehenden Ansprüche, **dadurch gekennzeichnet, dass** das Profil an der Innenseite des Flanschrandes vorgesehen ist.

7. Blumentopf nach einem der vorhergehenden Ansprüche, **dadurch gekennzeichnet, dass** die maximale Höhe des Profils an den Stellen, an denen das Profil an dem Flanschrandteil oder dem nach unten gerichteten Randteil vorgesehen ist, das Zweifache der Dicke des Flanschrandteils oder des nach unten gerichteten Randteils beträgt.

8. Blumentopf nach einem der vorhergehenden Ansprüche, **dadurch gekennzeichnet, dass** das Profil entlang der Länge des Flanschrandes in einem regelmäßigen Muster vorgesehen ist.

9. Blumentopf nach Anspruch 8, **dadurch gekennzeichnet, dass** auch die Trennstege entlang der Länge des Flanschrandes in einem regelmäßigen Muster verteilt vorgesehen sind, wobei die Regelmäßigkeit des Musters des Profils der Regelmäßigkeit des Musters der Trennstege entspricht.

10. Blumentopf nach einem der vorhergehenden Ansprüche, **dadurch gekennzeichnet, dass** das Profil Versteifungsteile aufweist, die mit der Längsrichtung des Flanschrandes einen Winkel einschließen.

11. Blumentopf nach Anspruch 10, **dadurch gekennzeichnet, dass** die Größe des Winkels zwischen 30 Grad und 60 Grad liegt.

12. Blumentopf nach Anspruch 10 oder 11, **dadurch gekennzeichnet, dass** die Versteifungsteile zumindest teilweise bogenförmig sind.

13. Blumentopf nach einem der Ansprüche 10 bis 12, **dadurch gekennzeichnet, dass** sich benachbarte Versteifungsteile in einer V-Form miteinander verbinden.

14. Blumentopf nach Anspruch 13, **dadurch gekennzeichnet, dass** die V-förmigen Verbindungen auf der Seite der Standwand vorgesehen sind.

15. Blumentopf nach einem der vorhergehenden Ansprüche, **dadurch gekennzeichnet, dass** der Blumentopf ein Spritzgussprodukt ist.

## Revendications

1. Pot (1) comprenant un fond, une paroi debout (5) se reliant au fond et un bord relevé raidi (6) sur le côté supérieur de la paroi debout, lequel bord relevé a une partie de bord orientée vers le bas (7) et une partie de bord relevé (8) qui relie mutuellement la paroi debout et la partie de bord orientée vers le bas, où le bord relevé entre la paroi debout et la partie de bord orientée vers le bas est muni de cloisons s'étendant radialement (12), **caractérisé en ce que** le pot est également muni d'un profil au moins partiellement en forme de fil (10) au moins sur la partie de bord relevé, lequel profil s'étend sur au moins la majeure partie de la longueur du bord relevé.

2. Pot selon la revendication 1, **caractérisé en ce que** le profil est également prévu sur la paroi debout.

3. Pot selon la revendication 1 ou 2, **caractérisé en ce que** le profil est également prévu sur la partie de bord orientée vers le bas.

4. Pot selon l'une des revendications précédentes, **caractérisé en ce que** la coupe transversale de la forme de fil est telle que la largeur de la forme de fil, telle que vue en coupe transversale, diminue dans la direction de la surface du bord relevé sur lequel le profil est prévu.

5. Pot selon l'une des revendications précédentes, **caractérisé en ce que** la hauteur de la forme de fil varie sur la longueur du profil.

6. Pot selon l'une des revendications précédentes, **caractérisé en ce que** le profil est prévu sur le côté interne du bord relevé.

7. Pot selon l'une des revendications précédentes, **caractérisé en ce que** la hauteur maximale du profil est deux fois l'épaisseur de la partie de bord relevé ou de la partie de bord orientée vers le bas aux positions où le profil est prévu sur la partie de bord relevé ou la partie de bord orientée vers le bas.

8. Pot selon l'une des revendications précédentes, **caractérisé en ce que** le profil est prévu selon un motif régulier sur la longueur du bord relevé.

9. Pot selon la revendication 8, **caractérisé en ce que** les cloisons sont également prévues de manière à être réparties selon un motif régulier sur la longueur du bord relevé, où la régularité du motif du profil correspond à la régularité du motif des cloisons.

10. Pot selon l'une des revendications précédentes, **caractérisé en ce que** le profil comprend des parties de raidissement qui forment un angle avec la direction longitudinale du bord relevé.

11. Pot selon la revendication 10, **caractérisé en ce que** la grandeur de l'angle est comprise entre 30 degrés et 60 degrés.

12. Pot selon la revendication 10 ou 11, **caractérisé en ce que** les parties de raidissement sont au moins partiellement arquées.

13. Pot selon l'une des revendications 10 à 12, **caractérisé en ce que** des parties de raidissement adjacentes se relient en forme de V l'une à l'autre.

14. Pot selon la revendication 13, **caractérisé en ce que** les liaisons en forme de V sont prévues sur le côté de la paroi debout.

15. Pot selon l'une des revendications précédentes, **caractérisé en ce que** le Pot est un produit moulé par injection.
